# EUROPEAN PATENT APPLICATION

(11) **EP 0 753 252 A1**
(43) Date of publication of application: **15.01.1997**
(21) Application number: 96200434.7
(22) Date of filing: 20.02.1996
(51) Int. Cl.: A01K 93/00, A01K 91/03

(54) **Angling device and float**

(30) Priority: 12.07.1995 GB 9514246
(71) Applicant: Founds, Martin John, Chesterfield, Derbyshire S40 1RQ (GB); Smith, Terence Frank, Chesterfield, Derbyshire S40 1RQ (GB)
(72) Inventor: Founds, Martin John, Chesterfield, Derbyshire S40 1RQ (GB); Smith, Terence Frank, Chesterfield, Derbyshire S40 1RQ (GB)
(74) Representative: Long, Edward Anthony

(57) **Abstract**

An angling device (1) attachable to a float (14) comprising two spiral or helical line guides (6A, 6B) each defining an open ended, spiral or helical guide path, in a selected one of which line guides (6A, 6B) a portion (16B) of a fishing line (16) is, in use, adapted to be located, with the relationship between the line (16) and the selected line guide (6A or 6B) being such that, in a slack line mode, the line is able to slide through the guide (6A or 6B) with little or no frictional resistance, while, in a tensioned line mode, free passage is restricted by frictional engagement of the line (16) with the line guide (6A or 6B). The invention also includes a float (14) in combination with an angling device (1).

## Description

This invention relates to an angling device for attachment to a float, and to a float provided with such a device.

Conventionally, float fishing involves determination of the depth at which the angler wishes to fish followed by fixation of the float on the line at a distance from the hook/lure/bait/sinker to locate the latter at the desired depth. Such fixation is typically effected by clipping lead shot to the line or by the use of stop knots. Frequently, however, the angler wishes to change depth, for instance to fish at a different part of a river/lake, which has necessitated reeling in the line, removing the shot/stop knot etc., and re-fixing the float in a fresh position on the line. This is of course a time consuming operation and one proposal, known in practice for leger fishing, to provide ready positional adjustment of a float along a line, is to provide the lower end of the float with a tube through which the line passes, bent at an angle in excess of 90° such that tension on the (line resulting from a combination of the ledger and the angler reeling in line to create sufficient tension) resists movement of the float along the line, whilst conversely a slack line (resulting from a fish taking the bait and leger or the angler reeling out line) permits float movement and hence adjustment along the line. Whilst satisfactory initially, such floats are subjected to excessive wear, resulting in premature failure as well as having a propensity to damage a line and consequently affect the essential free movement, when required, of such a float along the line, whilst both terminal ends of the tube project as spigots from the float and present sources for line or float snagging.

A basic object of the present invention is to provide an improved angling device over prior art proposals.

According to a first aspect of the present invention there is provided an angling device attachable to a float comprising a spiral or helical line guide defining an open ended, spiral or helical guide path, in which line guide a portion of a fishing line is, in use, adapted to be located, with the relationship between the line and the line guide being such that, in a slack line mode the line is able to slide through the guide with little or no frictional resistance and hence with relatively free passage, while, in a tensioned line mode, such free passage is restricted by frictional engagement of the line with the line guide.

The device in accordance with the invention can be attached to a variety of floats (waggler, stick, pole and carp/pike) with either bottom or bottom and top fastening.

In accordance with the second aspect of the invention, there is provided a float in combination with an angling device as defined above.

Floats in accordance with the second aspect allow anglers to leger (to fish with a fixed bait on the swim bottom) but with the benefit to float watch that provides the following advantages;
- It is a more pleasing method to fish;
- It shows bites in a much more sensitive way;
- It shortens the distance between the baited hook and the float;
- It locks on the line more precisely and with increased grip over prior art proposals.
- It works in still and moving water;
- It automatically finds its own depth and alleviates the need for stopknots;
- It eliminates line snagging in shallow margin weed/rocks;
- It combines all the attractions of float fishing with the advantages of still bait presentation and deep water conditions.

It will work above the bottom in a trolling situation (towing the float along the surface e.g. behind a boat)

The spiral or helical line guide may be constituted, at least in part, by a channel, groove, bore, flute or tube extending around an axis of required length. Although the line guide may be metallic, it is preferably of synthetic plastic material.

If in the form of a channel, groove, bore or flute, the line guide is provided in a body member which is elongated to provide a guide of required axial length, whereas if in the form of a tube the latter may be self-supporting if the material of the tube is metallic, e.g. of copper, of suitably fine gauge, or if the material of the tube is a suitable synthetic plastics that is substantially non-deformable or, if deformable, is elastomeric.

In detail, in the embodiment incorporating a body member, the latter may comprise an inner, elongate cylindrical core having a longitudinal axis intended, in use, to be upright and co-incident with that of a float to which it is attached. Into the external periphery of the core an outwardly open, spiral channel, groove or flute, typically of square or rounded "U"-section, or semi-circular section, is provided, with the open side of the channel, groove or flute closed off so that the channel, groove or flute is converted into a bore when the core is fitted into an outer sleeve, the inner periphery of the outer sleeve closing off the bore. The core may be secured in the sleeve as a push-fit or by adhesive, and may be secured to the float by means of a spigot and bore connection. Thus, in a preferred embodiment, where the device is attached to a lower end of the float, the upper end of the core is provided with a co-axial, upwardly extending spigot to be received, as a push-fit, possibly with the aid of adhesive for permanence of attachment, in a blind co-axial bore provided in the lower end of the float.

Both ends of the sleeve may be open.

To ease insertion of a fishing line into the line guide, then along the groove, and finally out of the other open end of the guide (following which a leger/hook/lure/weights etc., may be attached to the length of line that has passed through the guide), the inlet end may be opened out into a taper or funnel mouth.

Preferably, the line guide is at an angle of 240° to 300° a longitudinal axis of the device or to vertical or to the longitudinal axis of an elongate cylindrical core, extending over a distance of typically 3.5 cm. Clearly there is a relationship between the diameter of the fishing line in use and the dimension of the groove, so that in practice 3 to 6 lb line may be accommodated in a groove of a first dimension, while 8 to 15 lb lines being greater in diameter, require a groove of increased dimensions.

It will be appreciated that, as an alternative of producing two or three angling devices in accordance with the invention each with a differently dimensioned guide path to accommodate the range of line and weights that a typical angler would carry e.g. 2 lb to 20 lb, it is possible to provide two or possibly three differently dimensioned guide paths in a single angling device in accordance with the invention with the angler selecting the appropriate guide path for the line in use at any particular time.

Examples of the angling device in accordance with the invention are shown by way of examples in the accompanying drawings, in which:-
Figure 1 is a diagrammatic side elevation of a core of an angling device in accordance with the first aspect of the invention;
Figure 2 corresponds to Figure 1 but shows another side of the core;

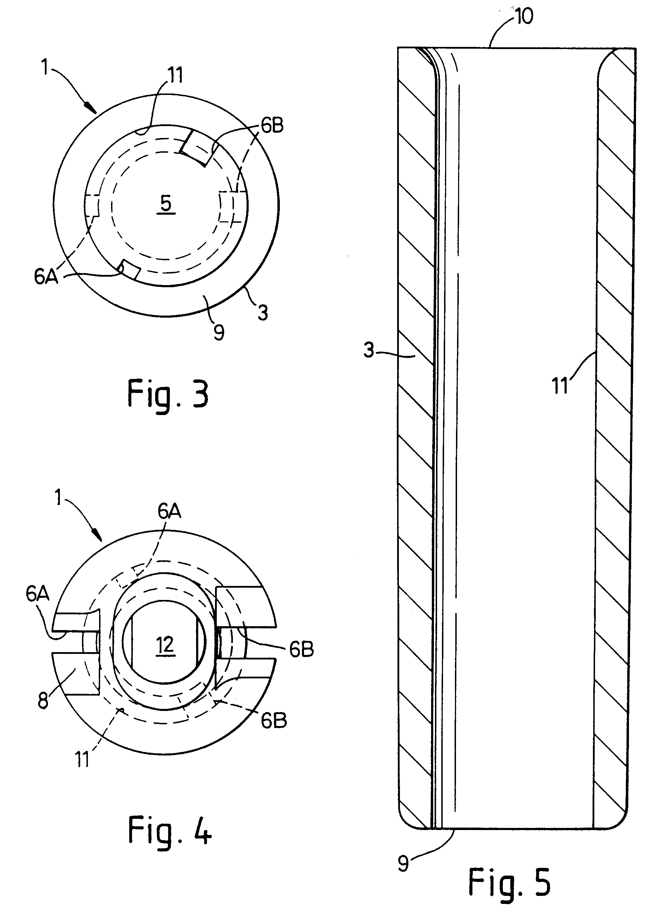

Figures 3 and 4 are respectively top plan and underneath plan views of the core of Figure 1; and
Figures 5 is a longitudinal sectional view of the sleeve for use with the core of Figures 1 to 4.

In the drawings, an angling device 1 comprises a body member in the form of an elongate, inner core 2 of synthetic plastics over which is fitted an outer sleeve 3 also of synthetic plastics. The core 2 is generally cylindrical having an upper end surface 4 and a lower nose 5. Into the outer periphery of the core 2 is formed, e.g. by machining, a part of a spiral or helical fishing line guide 6A and 6B each defining an open ended spiral or helical guide path, each guide 6A, 6B being a differently dimensioned square or round "U"-section groove, with guide 6A being suitable for 3 - 6 lb line and guide 6B for 8 - 15 lb line. Both guides 6A, 6B are at an angle of 240° to 300° to longitudinal axis 7 of the core 2 and extends from the upper end surface 4, where it is provided with a taper mouth 8 to ease insertion of a leading end of fishing line into the device 1 and specifically into, and along, a selected guide 6A or 6B, to the nose 5, from where, in use, the line emerges from the device 1 and to which emerged portion of line a hook(s) and/or, lure(s), and/or sinker weight(s), and/or leger is or are attached.

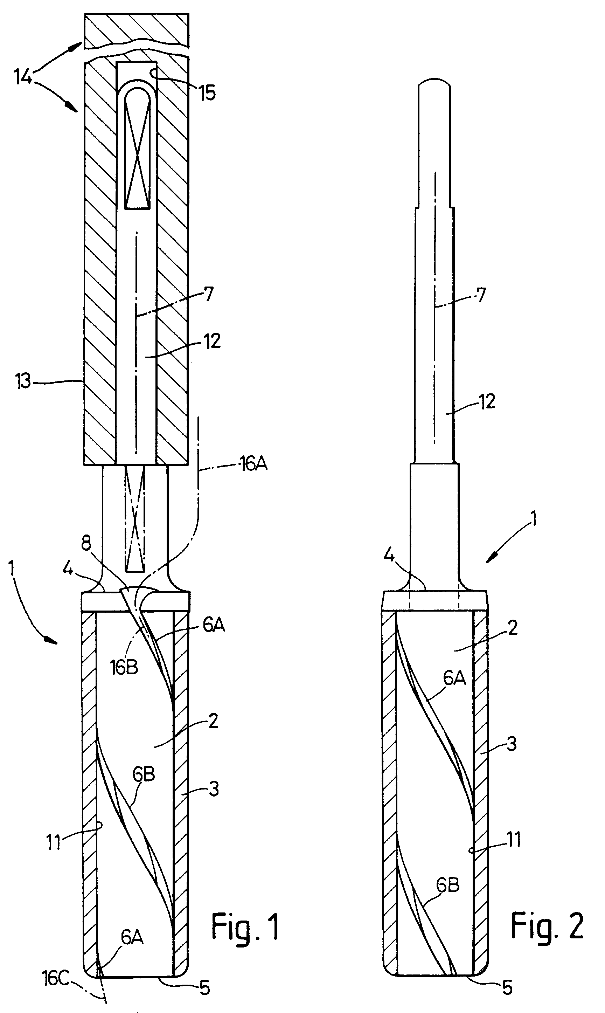

However, before the line can be threaded through the device 1, the open grooves of the guides 6A, 6B are completed by being closed off by fitting together the core 2 of Figure 1 and the sleeve 3 of Figure 2, the sleeve 3 being of hollow cylindrical configuration, having an open bottom 9, and an open top 10, whilst periphery 11 is of a diameter which approximates to the external diameter of the core 2 whereby the two components making up the device 1 may be readily pushed together, by hand, and be retained in their assembled condition by friction, yet readily pulled apart.

The core 2 is provided with a co-axial, integral spigot 12 by which the device 1 is attachable, permanently or temporarily to a lower end 13 of a float 14, by providing a blind bore 15 of suitable dimensions in the lower end. Adhesive may be employed for permanent attachment.

Illustrated in Figure 1 in chain-dotted line is a first portion 16A of fishing line 16 extending downwardly from the float 14, a second portion 16B within the device 1 and specifically within the selected guide 6A or 6B, and a third portion 16C beyond the device 1, to which third portion a hook(s), and/or lure(s), and/or weight(s), and/or leger (none shown) are attachable as required by the angler.

In use, when a float 14 fitted with a device 1 is mounted on a line 16, the angler casts, and the weight or leger conventionally attached to line portion 16C finds the bottom of the river etc. Initially, a first length of slack line invariably exists between the float and the leger and a second length between the tip of the fishing rod and the float. However, with the angling device and float in accordance with the invention, when the angler then gently winds in, firstly slack line between the tip and float is taken up in the conventional manner, but thereafter, the slack line between the device 1 and leger begins to be reeled in as the line 16 is free to move through the device 1 until no free line exists and the effect of the leger creates tension, which the angler can feel, which results in the device 1 and hence the float being locked to the line by frictional engagement of the line with the guide path. Thus, the float 14 and device 1 automatically move along the line to a location correct for the particular depth of water being fished, with a bite being instantaneously reflected at the float, due to a tensioned line positively existing between the leger and the device 1.

## Claims

1. An angling device (1) attachable to a float (14) characterised in that the device (1) comprises a spiral or helical line guide (6A, 6B) defining an open ended, spiral or helical guide path, in which line guide (6A, 6B) a portion (16B) of a fishing line (16) is, in use, adapted to be located, with the relationship between the line (16) and the line guide (6A, 6B) being such that, in a slack line mode, the line (16) is able to slide through the guide (6A, 6B) with little or no frictional resistance and hence with relatively free passage, while, in a tensioned line mode, such free passage is restricted by frictional engagement of the line (16) with the line guide (6A, 6B).

2. A device as claimed in Claim 1, characterised in that the line guide (6A, 6B) is constituted, at least in part, by a channel, groove, bore, flute or tube extending around an axis (7) of required length.

3. A device as claimed in Claim 1 or Claim 2, characterised in that the line guide (6A, 6B) is of synthetic plastics material.

4. A device as claimed in Claim 1, with the line guide (6A, 6B) in the form of a channel, groove, or bore, characterised in that the line guide is provided in a body member or core (2) which is elongated to provide a guide of required axial length.

5. A device as claimed in Claim 4, characterised in that the body member comprises an inner, elongate cylindrical core (2) having a longitudinal axis (7) intended, in use, to be upright and co-incident with that of a float (14) to which it is, in use, to be attached.

6. A device as claimed in Claim 5, characterised in that in the external periphery of the core (2) an outwardly open, spiral channel, groove or flute (6A, 6B) is formed.

7. A device as claimed in Claim 6, characterised in that the open side of the channel, groove or flute (6A, 6B) is closed off, so that the channel, groove or flute (6A, 6B) is converted into a bore when the core (2) is fitted into an outer sleeve (3), the inner periphery of the outer sleeve closing off the bore.

8. A device as claimed in any preceding Claim, characterised in that the inlet end of the guide (6A, 6B) is opened out into a taper or funnel mouth (8).

9. A device as claimed in any preceding claim comprising two or three spiral or helical line guides (6A, 6B), each of different cross-sectional dimensions, to accommodate two or three differently rated fishing lines (16) of different diameters.

10. A float (14) in combination with an angling device (1) as defined in any preceding claim.

11. A float as claimed in Claim 10, provided at what, in use, is a lower end (13), with a blind receiving bore (15) for a push-in spigot (12) of the angling device.

12. A float as claimed in Claim 11, with the spigot (12) secure in the bore (15) by adhesive.
